# EUROPÄISCHE PATENTSCHRIFT

(11) **EP 2 468 498 B1**
(45) Veröffentlichungstag und Bekanntmachung des Hinweises auf die Patenterteilung: **01.10.2014**
(21) Anmeldenummer: 12160194.2
(22) Anmeldetag: 08.07.2010
(51) Int. Cl.: B32B 5/26, B32B 19/06, B32B 21/02, B32B 21/10, E04C 2/00, E04F 13/00, C04B 28/04

(54) **Klebemörtel zum Anbringen einer Dämmplatte an einer Wand oder einer Decke eines Gebäudes**
Adhesive mortar for attaching an insulation board to a wall or a ceiling of a building
Mortier adhésif destiné à l'application d'un panneau isolant sur une paroi ou un mur de bâtiment

(30) Priorität: 15.07.2009 DE 102009033483; 15.07.2009 DE 202009009453 U
(43) Veröffentlichungstag der Anmeldung: 27.06.2012
(62) Teilanmeldung aus: 10168962.8
(73) Patentinhaber: Fibrolith Dämmstoffe GmbH, 56746 Kempenich (DE); quick-mix Gruppe GmbH & Co. KG, 49090 Osnabrück (DE)
(72) Erfinder: Bühning, Volker, 49163 Bohmte (DE); Kaning, Martin, 49565 Bramsche (DE); Rheindorf, Jürgen, 56642 Kruft (DE)
(74) Vertreter: Patentanwälte Olbricht Buchhold Keulertz

(56) Entgegenhaltungen:
- EP-A1- 1 260 490
- GB-A- 2 000 490
- DATABASE WPI Week 200863 Thomson Scientific, London, GB; AN 2008-K46909 XP002615095, -& CN 101 066 859 A (SHENZHEN MINGYUAN FLUORINE DOPE CO LTD) 7. November 2007 (2007-11-07)

## Beschreibung

Die Erfindung betrifft einen Klebemörtel zum Anbringen einer Dämmplatte an einer Wand oder einer Decke eines Gebäudes nach dem Oberbegriff des Patentanspruchs 1.

Dämmplatten mit schalldämmenden und/oder wärmedämmenden Eigenschaften, die an Wänden oder Decken von Gebäuden angebracht werden, sind bereits bekannt. Diese Dämmplatten können aus mehreren Schichten bestehen und werden mit den Wänden beziehungsweise den Decken des Gebäudes mittels mehreren Verbindungsmitteln verbunden. Bei diesen Verbindungsmitteln kann es sich beispielsweise um Dübel, Nägel oder Anker handeln.

Das Befestigen der Dämmplatten an den Wänden beziehungsweise den Decken des Gebäudes gestaltet sich jedoch sehr aufwändig.

So ist ein als Platte ausgebildetes Verbundelement bekannt, das im Bauwesen Verwendung findet (DE 10 2005 014 577 A1). Dieses Verbundelement weist mindestens eine poröse Schicht auf, die in einer gasdiffusionsdichten Umhüllung angeordnet ist. An dieser Umhüllung der porösen Schicht liegt mindestens eine nicht evakuierte Schutzschicht an. Dieses Verbundelement wird mittels Dübeln, Nägeln, Ankern, Stiften, Klammern oder dergleichen an einer Wand befestigt.

Bekannt ist ferner eine Platte, die aus zwei miteinander verklebten Schichten besteht (JP 07-127157 A). Die erste Schicht besteht aus einer Furnierplatte, die mit einem feuerhemmenden Material imprägniert ist. Auf diese erste Schicht wird eine zweite Schicht aus Mineralwolle geklebt.

Aufgabe der vorliegenden Erfindung ist es, einen Klebemörtel bereitzustellen, mit dem Dämmplatten einfach an einer Wand oder einer Decke eines Gebäudes angebracht werden können.

Diese Aufgabe wird durch einen Klebemörtel nach den Merkmalen des Patentanspruchs 1 gelöst.

Die Erfindung betrifft einen Klebemörtel, mit dem eine Dämmplatte an einer Wand oder einer Decke eines Gebäudes angeordnet werden kann. Die Dämmplatte bildet zusammen mit dem Klebemörtel damit eine Anordnung, die an eine Wand oder eine Decke angebracht werden kann. Die Anordnung aus Dämmplatte und Klebemörtel bildet dabei so starke Haltekräfte aus, dass es nicht nötig ist, die Dämmplatte zusätzlich durch Verbindungsmittel wie beispielsweise Dübel, Nägel, Anker, Stifte, Klammern oder dergleichen zu befestigen. Da auf solche Verbindungsmittel verzichtet werden kann, gestaltet sich das Anbringen der Dämmplatten an Wänden oder Decken von Gebäuden sehr einfach. Neben der Schall- und Wärmedämmung weisen die so an den Wänden beziehungsweise Decken von Gebäuden angebrachten Dämmplatten eine gute Schlagfestigkeit und ein gutes Brandverhalten (F 180) auf.

Die Dämmplatte besteht aus mehreren Schichten, wobei die verschiedenen Schichten mittels einer Bindemittelschicht verbunden sind. Vorzugsweise weist die Dämmplatte zwei Schichten auf, nämlich eine Holzwolle-Deckschicht und eine Mineralwolleschicht, die mittels der Bindemittelschicht verklebt sind. Die Dämmplatte weist damit vorzugsweise drei Schichten auf. Die Mineralwolleschicht ist dabei auf der Seite, auf der die Bindemittelschicht angeordnet ist, perforiert. Dadurch ist es möglich, dass in die in der Mineralwolleschicht eingebrachten Löcher das Bindemittel der Bindemittelschicht eindringen kann. Durch die Perforation wird damit die Oberfläche der Mineralwolleschicht vergrößert, womit mehr Bindemittel mit der Mineralwolleschicht in Kontakt treten kann. Dadurch wird die Haltekraft zwischen der Mineralwolleschicht sowie der Bindemittelschicht deutlich erhöht.

Ein Ausführungsbeispiel ist in den Figuren dargestellt und wird im Folgenden näher beschrieben. Es zeigen:
- Figur 1: eine perspektivische Ansicht einer Dämmplatte;
- Figur 2: einen Schnitt A-A durch die in Figur 1 gezeigte Dämmplatte;
- Figur 3: einen vergrößerten Ausschnitt des in Figur 2 gezeigten Schnitts durch die Dämmplatte;
- Figur 4: eine Draufsicht auf eine perforierte Mineralwolleschicht nach Schnitt B-B;
- Figur 5: eine perspektivische Ansicht einer Wand mit daran angebrachten Dämmplatten;
- Figur 6: einen Schnitt C-C durch die an der Wand angebrachten Dämmplatten gemäß Figur 5.

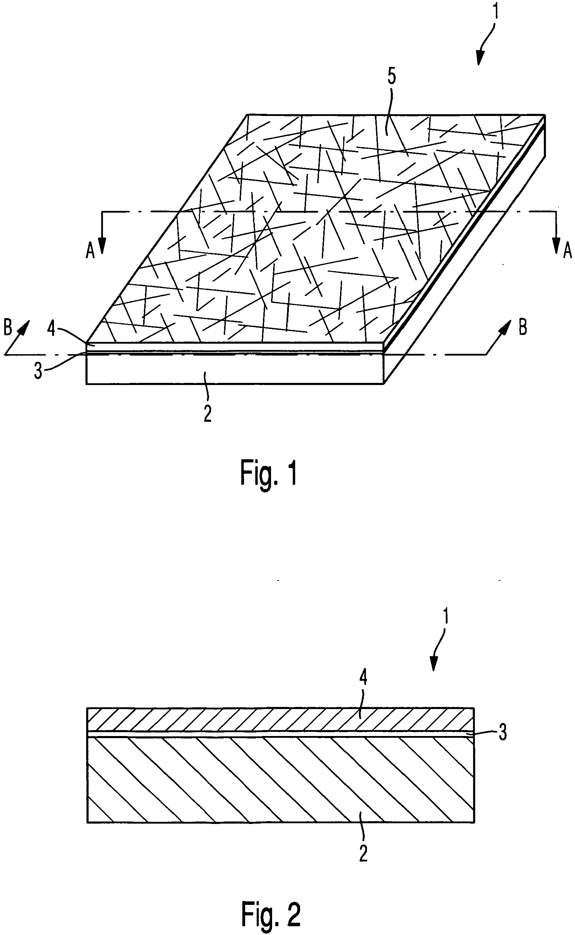

Figur 1 zeigt eine perspektivische Ansicht einer Dämmplatte 1. Diese Dämmplatte 1 weist eine Mineralwolleschicht 2 auf, die mittels einer Bindemittelschicht 3 mit einer Holzwolle-Deckschicht 4 verbunden ist. Diese Bindemittelschicht 3 weist ein Bindemittel auf, das als Kleber dient. Die Mineralwolleschicht 2 sowie die Holzwolle-Deckschicht 4 sind als Platten ausgebildet. Die Dämmplatte 1 wird mittels eines Klebemörtels über die Mineralwolleschicht 2 an eine Decke oder an eine Wand, beispielsweise eine Decke oder eine Wand eines Gebäudes, angebracht. Damit bildet die Holzwolle-Deckschicht 4 die sichtbare Seite der Dämmplatte 1. Eine Wand oder eine Decke eines Gebäudes sind jedoch in Figur 1 der Übersicht halber nicht dargestellt.

Die Abmessungen dieser Dämmplatte 1 können dabei je nach Bedarf unterschiedlich gewählt werden. So ist es beispielsweise möglich, die Dämmplatte 1 mit den Abmessungen 1000 mm x 300 mm oder 500 mm x 600 mm bereitzustellen.

Die Mineralwolleschicht 2 besteht aus einer recycelbaren kunstharzverbundenen Mineralwolle, die vorzugsweise ein Raumgewicht von 120 bis 130 kg/m³ besitzt. Die Mineralwolleschicht 2 weist dabei vorzugsweise eine Dicke von 45 bis 125 mm auf, kann jedoch auch andere Stärken aufweisen

Die Mineralwolleschicht 2 weist im Mittel eine Druckfestigkeit von circa 60 kPa sowie eine Abreißfestigkeit von circa 45 kPa auf. Die mittlere Wärmeleitfähigkeit beträgt vorzugsweise 0,04 W/m·K und die mittlere spezifische Wärmekapazität vorzugsweise 0,84 kJ/kg·K. Die Wasserdampfdiffusionswiderstandszahl liegt bei circa 1,1.

Diese Mineralwolleschicht 2 ist dämmend gegenüber Wärme sowie Schall.

Die Holzwolle-Deckschicht 4 besteht aus Holzwolle, die mit Weiß- oder Grauzement vermischt ist. Durch diese Mischung aus Holzwolle und Zement (Weiß- oder Grauzement) weist die Holzwolle-Deckschicht 4 ein optimales Brandverhalten auf. Das Mischungsverhältnis von Zement zu Holzwolle beträgt dabei vorzugsweise 60: 40 Gewichtsprozent. Die Holzwolle-Deckschicht 4 weist eine Stärke von 3 bis 10 mm, vorzugsweise von 5 mm auf. Wie in Figur 1 zu erkennen, kann die Holzwolle-Deckschicht 4 mit einer Oberfläche 5 mit einer sehr feinen Kontur versehen sein. Die Holzwolle-Deckschicht 4 weist somit eine Oberfläche auf, die über ihre Konturen eine hohe Oberflächenqualität sowie ein ansprechendes Aussehen besitzt.

Die als Kleber fungierende Bindemittelschicht 3 weist vorzugsweise eine Dicke von 0,5 bis 2 mm auf, wodurch die Dämmplatte 1 eine Stärke aufweist, die im Wesentlichen der Summe der Dicke der Holzwolle-Deckschicht 4 sowie der Dicke der Mineralwolleschicht 2 entspricht.

Das Bindemittel der Bindemittelschicht 3 weist einen mit Wasser angemischten Mörtel, vorzugsweise einen Zementmörtel auf. Vorteilhaft bei einem solchen Zement-Frischmörtel ist, dass die Bestandteile Trockenmörtel und Anmachwasser sehr einfach vorgehalten und mit geläufigen Mitteln passend angemischt werden können. Der Frischmörtel lässt sich, insbesondere mit einer überschüssigen Menge an Anmachwasser, die über den Wasserbedarf des Zements für das Abbinden hinausgeht, sehr geschmeidig gestalten und dementsprechend auch für das Aufbringen des Bindemittels auf der Mineralwolleschicht 2 beziehungsweise der Holzwolle-Deckschicht 4 und für das Anpressen der Faserbeschichtung in die Bindemittelschicht günstig einstellen.

Ein solcher mineralischer Mörtel weist eine gute Haltbarkeit auf, ist also anders als organische Materialien nicht anfällig für Veränderungen oder Zersetzungen infolge von Umgebungseinflüssen. Ferner besitzt dieser mineralische Mörtel brandtechnisch gute Flammwiderstandswerte, die die Eigenschaften der aufgebrachten Holzwolle-Deckschicht 4 unterstützen.

Den guten Bindeeigenschaften des Mörtels kommt nicht nur der relativ hohe Zementanteil zugute, sondern auch die abgestimmte und verdichtbare Beimischung der mineralischen Zuschlagstoffe Sand und Füllstoffe, wie zum Beispiel Flugasche und/oder Füllstoffmehl. Mit weiteren Zusätzen wie Polymer-Dispersion, Methylzellulose und Stabilisierer lassen sich aus den Erfahrungen in der Mörtelherstellung sowie der Mörtelverarbeitung heraus die Festigkeitswerte verbessern, die Entmischung des Mörtels hemmen und das Wasser für den Abbindevorgang halten. Ein Entschäumer-Zusatz geläufiger Art dient dazu, Luft aus dem Frischmörtel zu entfernen, und verhindert dadurch schwankende Dichtewerte des Mörtels infolge unterschiedlicher Luftgehalte.

Gute Hafteigenschaften werden erhalten, wenn die Bindemittelschicht 3 einen Trockenmörtel mit den folgenden Bestandteilen aufweist:

| | |
|---|---|
| 40 bis 60 | M% Zement |
| 30 bis 50 | M% Sand mit einer Körnung von bis zu 0,63 mm |
| 5 bis 20 | M% Flugasche und/oder Füllstoffmehl |
| 0,1 bis 1,5 | M% Polymer-Dispersion |
| 0,1 bis 1,2 | M% Stabilisierer |
| 0,1 bis 1 | M% Methylzellulose |
| 0,1 bis 1 | M% Entschäumer |

Dieser Trockenmörtel wird mit Anmachwasser angemischt, wodurch der gewünschte Frischmörtel erhalten wird. Dabei werden dem Trockenmörtel -je nach Bedarf - 0,5 bis 1 Liter Anmachwasser je kg Trockenmörtel zugegeben.

Bevorzugt ist dabei ein Trockenmörtel mit folgender Zusammensetzung:

| | |
|---|---|
| 40 bis 50 | M% Zement |
| 35 bis 45 | M% Sand mit einer Körnung von bis zu 0,63 mm |
| 9 bis 17 | M% Flugasche und/oder Füllstoffmehl |
| 0,5 bis 1 | M% Polymer-Dispersion |
| 0,4 bis 1,2 | M% Stabilisierer |
| 0,2 bis 0,6 | M% Methylzellulose |
| 0,3 bis 0,8 | M% Entschäumer |

Der Trockenmörtel mit dieser Zusammensetzung wird ebenfalls mit 0,5 bis 1 Liter Anmachwasser je kg Trockenmörtel angemischt, wodurch der gewünschte Frischmörtel erhalten wird.

Ein besonders bevorzugtes Ausführungsbeispiel für einen Frischmörtel für eine Bindemittelschicht sieht die Vermischung von Trockenmörtel mit Anmachwasser im Verhältnis von ca. 0,5 Liter Anmachwasser je kg Trockenmörtel vor, wobei der Trockenmörtel folgende Bestandteile aufweist:

| | |
|---|---|
| Zement | 45 M% |
| Sand | 40,3 M%, wobei der Sand eine Körnung von bis zu 0,63 mm aufweist |
| Flugasche | 2,75 M% |
| Polymer-Dispersion | 0,9 M% |
| Methylzellulose | 0,35 M% |
| Stabilisierer | 0,5 M% |
| Entschäumer | 0,5 M%. |

Die so bereitgestellte Dämmplatte 1 kann der Feuer-Widerstandsklasse F 180 zugeordnet werden und kann mehr als 2 h einer Temperatur von mehr als 1100 °C standhalten. Dadurch, dass die Mineralwolleschicht 2 der Dämmplatte 1 sehr gute Dämmeigenschaften gegenüber Schall und Wärme aufweist, werden in der Dämmplatte 1 sehr gute Eigenschaften in der Wärme- und Schalldämmung mit einem hervorragenden Brandverhalten kombiniert. Das gute Brandverhalten der Dämmplatte 1 ist dabei nicht nur auf die Holzwolle-Deckschicht 4 sondern auch auf die dem Zement zugesetzten Additive des Trockenmörtels der Bindemittelschicht 3 zurückzuführen.

Die Herstellung einer solchen Dämmplatte 1 kann folgendermaßen erfolgen.

Zuerst wird die plattenförmige Mineralwolleschicht 2 bereitgestellt, auf die das Bindemittel aufgetragen wird. Dabei wird das Bindemittel derart aufgetragen, dass eine Bindemittelschicht 3 entsteht, deren Stärke 0,5 bis 2 mm beträgt. Damit die Bindemittelschicht 3 noch besser an der Mineralwolleschicht 2 haftet, wird die Mineralwolleschicht 2 zuvor auf der Seite, auf der die Bindemittelschicht 3 aufgebracht wird, perforiert. Dadurch, dass durch die Perforation die Mineralwolleschicht 2 auf der Seite, auf der das Bindemittel aufgetragen wird, Löcher aufweist, kann das Bindemittel in die Löcher eindringen. Die Perforation der Mineralwolleschicht 2 ist jedoch in der Figur 1 nicht zu erkennen. Nach Aufbringen der Bindemittelschicht 3 auf die Mineralwolleschicht 2 wird auf die Bindemittelschicht 3 die Holzwolle-Deckschicht 4 aufgebracht, wodurch ein Rohling einer Dämmplatte entsteht. Diese Dämmplatte 1 wird dann getrocknet. Das Trocknen der Dämmplatte 1 wird dabei recht langsam und bei nicht zu hohen Temperaturen durchgeführt. Dadurch wird vermieden, dass die Dämmplatte schüsselt. Nach dem Trocknen werden die Kanten der Platten je nach Kundenwunsch (gerade Kanten oder gefaste bzw. gefalzte Kanten) bearbeitet. Bei Bedarf kann die Dämmplatte 1 auch auf die gewünschte Größe zugeschnitten werden.

Aufgrund der ausgezeichneten Hafteigenschaften des Bindemittels können auch Schichten miteinander verbunden werden, die aus einem anderen Material als Holzwolle oder Mineralwolle bestehen. So ist es beispielsweise auch möglich, Schichten aus einem organischen Material, wie beispielsweise Polystyrol oder Polyurethan, miteinander zu verbinden.

Vorteilhaft bei diesen Dämmplatten ist ferner, dass diese gut gelagert werden können. So können mehrere solcher Dämmplatten auch zu einem Paket geschnürt werden, ohne dass sich die Platten verbiegen.

In Figur 2 ist ein Schnitt A-A durch die in Figur 1 gezeigte Dämmplatte 1 dargestellt. Zu erkennen ist wiederum die Mineralwolleschicht 2, auf der die Bindemittelschicht 3 angeordnet ist. Auf der Bindemittelschicht 3 befindet sich die Holzwolle-Deckschicht 4.

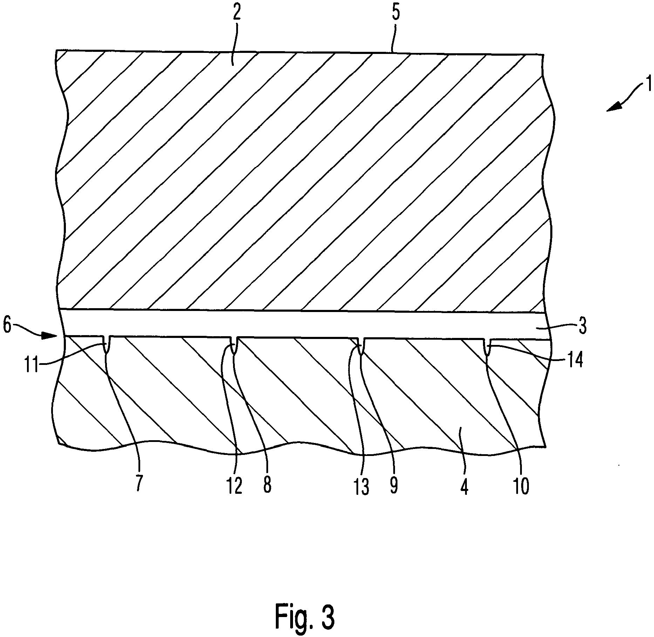

Figur 3 zeigt einen vergrößerten Ausschnitt des in Figur 2 gezeigten Schnitts durch die Dämmplatte 1. Die Holzwolle-Deckschicht 4 mit der Oberseite 5 ist über die Bindemittelschicht 3 mit der Mineralwolleschicht 4 verbunden. Die Mineralwolleschicht 2 weist eine Perforation 6 auf, wobei in der Figur 3 nur die Löcher 7 bis 10 zu sehen sind. In diesen Löchern 7 bis 10 befindet sich ein Teil des Bindemittels in Form von Stiften 11 bis 14, so dass die Bindemittelschicht 3 zumindest teilweise auch in der Mineralwolleschicht 2 angeordnet ist. Die Tiefe der Löcher beträgt 0,1 bis 3 mm und kann dabei ungefähr der Dicke der Bindemittelschicht 3 entsprechen. Durch diese Stifte 11 bis 14 wird die Haftung der Bindemittelschicht 3 mit der Mineralwolleschicht 2 deutlich verbessert, weil die Oberfläche der Mineralwolleschicht 3 durch die Perforation erhöht ist, wodurch mehr Bindemittel mit der Mineralwolleschicht 3 in Kontakt steht.

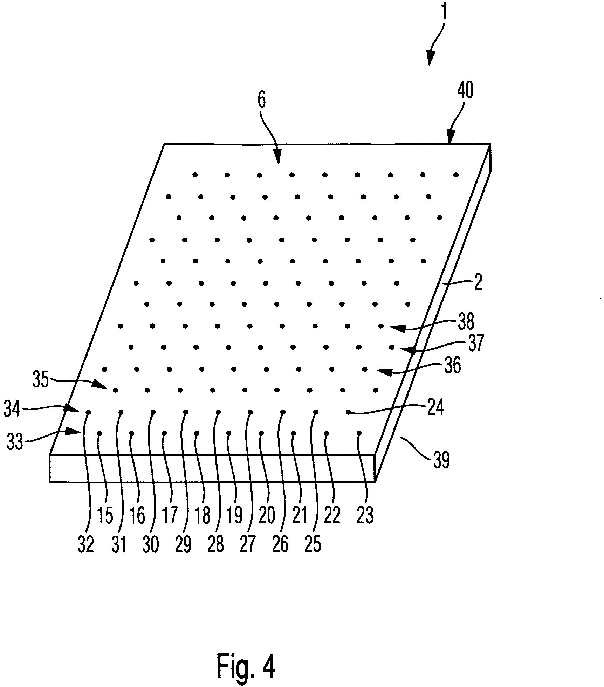

In Figur 4 ist ein Schnitt B-B durch die in Figur 1 gezeigte Dämmplatte 1 dargestellt. Dabei ist nur die Mineralwolleschicht 2 gezeigt, bei der auf einer Seite 40 die Perforation 6 angeordnet ist. Die Bindemittelschicht 3 sowie die Holzwolle-Deckschicht 4 sind aufgrund des Schnitts durch die Dämmplatte 1 nicht zu sehen. Die Figur 4 zeigt somit die Dämmplatte 1, bei der die Bindemittelschicht 3 sowie die Holzwolle-Deckschicht 4 entfernt wurden. Zu erkennen sind mehrere Löcher 15 bis 32 der Perforation 6. Diese Löcher 15 bis 32 sind in mehreren Reihen 33 bis 38 angeordnet. Dabei sind die Löcher 15 bis 32 der jeweiligen Reihen 33 bis 38 versetzt zueinander angeordnet. Es kann aber auch sein, dass die Löcher 15 bis 32 der entsprechenden Reihen 33 bis 38 nicht versetzt zueinander angeordnet sind. Zu erkennen ist auch eine Unterseite 39 der Mineralwolleschicht 2, mit der die Dämmplatte 1 an eine Wand oder eine Decke eines Gebäudes angeordnet werden kann.

Da die Holzwolle-Deckschicht 4 sowie die Bindemittelschicht 3 von der Mineralwolleschicht 2 entfernt worden sind, sitzen in den jeweiligen Öffnungen 15 bis 32 noch immer die Stifte, die jedoch in der Figur 4 der Übersicht halber nicht separat ausgezeichnet sind. Die Perforation 6 kann mittels einer entsprechenden Walze aufgebracht werden. Eine solche Walze weist Mittel auf, beispielsweise Nadeln, mit denen die Perforation 6 auf die Mineralwolleschicht 2 aufgebracht wird. Soll beispielsweise mit einer Walze die in Figur 4 gezeigte Perforation aufgebracht werden, bei der die Öffnungen 15 bis 32 der Reihen 33 bis 38 versetzt zueinander angeordnet sind, so muss auch die Walze Mittel aufweisen, die zu Reihen angeordnet sind, wobei die Mittel in diesen Reihen versetzt zueinander angeordnet sind. Eine solche Walze ist in der Figur 4 nicht dargestellt.

Eine solche Perforation kann auch an der Unterseite 39 der Mineralwolleschicht 2, das heißt an der der mit der Perforation 6 versehenen Seite 40 gegenüber liegenden Seite angebracht werden. Diese Unterseite 39 der Mineralwolleschicht ist gleichzeitig die Unterseite der Dämmplatte 1. Eine solche an der Unterseite 39 angebrachte Perforation ist jedoch in Figur 4 nicht zu erkennen. Diese an der Unterseite 39 angebrachte Perforation dient dazu, dass ein dort angebrachter Klebemörtel, mit dem die Dämmplatte 1 an einer Wand oder einer Decke eines Gebäudes angebracht werden kann, in die Mineralwolleschicht 2 eindringen kann. Somit kann der Klebemörtel in der Mineralwolleschicht 2 ebenfalls Stifte ausbilden. Durch diese in der Unterseite 39 angeordnete Perforation wird die Oberfläche, mit der der Klebemörtel mit der Mineralwolleschicht 2 in Kontakt steht, vergrößert. Dadurch wird die Haftung zwischen dem Klebemörtel und der Mineralwolleschicht 2 deutlich vergrößert. Das Anbringen eines Klebemörtels an der Unterseite 39 der Mineralwolleschicht 2 ist jedoch in Figur 4 nicht gezeigt.

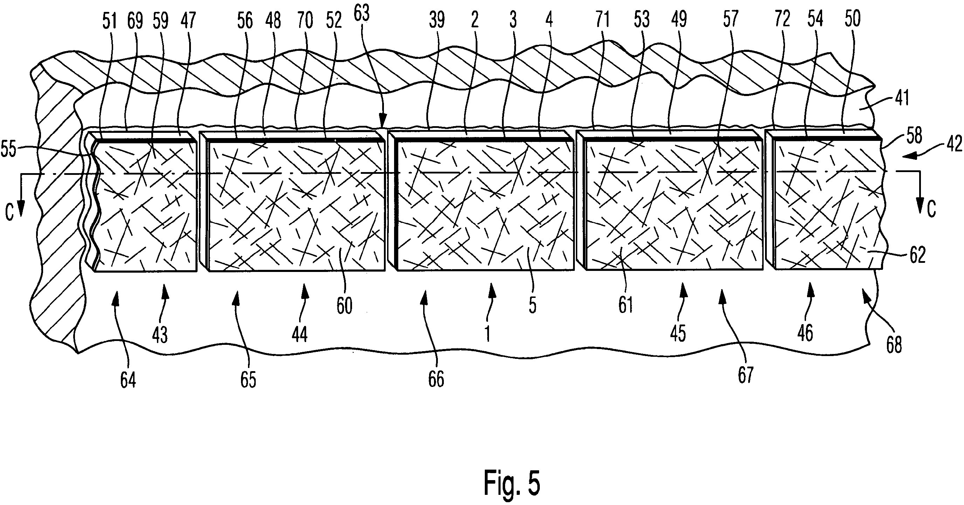

Figur 5 zeigt eine perspektivische Ansicht eines Ausschnitts einer Wand 41, beispielsweise einer Wand 41 eines Gebäudes, an der mehrere in einer Reihe 42 angeordnete Dämmplatten 1, 43 bis 46 angeordnet sind. Wie auch die Dämmplatte 1 weisen die Dämmplatten 43 bis 46 jeweils eine Mineralwolleschicht 47 bis 50 auf, die über eine Bindemittelschicht 51 bis 54 mit einer Holzwolle-Deckschicht 55 bis 58 verbunden ist.

Die drei Schichten der Dämmplatten 43 bis 46 bestehen aus den gleichen Materialien wie die Schichten der Dämmplatte 1, so dass diese Dämmplatten 43 bis 46 gegenüber Schall und Wärme ebenfalls dämmend sind und den gewünschten Brandschutz gewährleisten. Die Holzwolle-Deckschichten 55 bis 58 der Dämmplatten 43 bis 46 besitzen ebenfalls Oberflächen 59 bis 62, die eine Kontur aufweisen.

Wie auch die Dämmplatte 1 weisen die Mineralwolleschichten 47 bis 50 der entsprechenden Dämmplatten 43 bis 46 an der Seite, auf der die jeweilige Bindemittelschicht 51 bis 54 angeordnet ist, eine Perforation auf, die in Figur 5 jedoch nicht zu erkennen ist. Das Bindemittel der Bindemittelschicht 3, 51 bis 54 dringt dabei in Öffnungen der Perforation ein, wodurch die Oberfläche der Mineralwolleschichten 2, 47 bis 50 an dieser Seite vergrößert wird, so dass mehr Bindemittel an die Mineralwolleschichten 2, 47 bis 50 gelangen kann. Dadurch wird die Haltekraft zwischen den Mineralwolleschichten 2, 47 bis 50 und den Holzwolle-Deckschichten 4, 55 bis 58 der Dämmplatten 1, 43 bis 46 zusätzlich erhöht.

Zu erkennen ist auch eine Klebemörtelschicht 63, die auf der Wand 41 aufgebracht ist. Auf dieser Klebemörtelschicht 63 sind die Dämmplatten 1, 43 bis 46 angeordnet. Dabei hält die Klebemörtelschicht 63 die Dämmplatten 1, 43 bis 46 ohne weitere Hilfsmittel, wie zum Beispiel Dübel, Schrauben, Anker oder Nägel, an der Wand 41, weil die Klebemörtelschicht 63 aus einem Klebemörtel besteht, dessen Klebekraft von circa 20 kg/m² ausreicht, die Dämmplatten 1, 43 bis 46 ohne Hilfsmittel an der Wand 41 zu befestigen.

Aufgrund der hohen Haltekraft von circa 20 kg/m², spielt die Abbindezeit des Klebemörtels keine Rolle, weil die an die Wand 41 angebrachten Dämmplatten 1, 43 bis 46 direkt an der Wand 41 haften bleiben. Die Klebemörtelschicht 63 weist dabei eine Stärke von bis zu 10 mm, vorzugsweise von 1 bis 5 mm und besonders bevorzugt von 1 bis 2 mm auf.

Vorteilhaft ist dabei, wenn auch die Mineralwolleschichten 2, 47 bis 50 der entsprechenden Dämmplatten 1, 43 bis 46 Unterseiten 39, 69 bis 72 aufweisen, die perforiert sind, wobei eine solche Perforation in Figur 5 nicht zu erkennen ist. Damit weisen die Mineralwolleschichten 2, 47 bis 50 der Dämmplatten 1, 43 bis 46 Unterseiten 39, 69 bis 72 auf, die gegenüber nicht perforierten Unterseiten eine größere Oberfläche aufweisen. Es kann also mehr Klebemörtel an die Mineralwolleschichten 2, 47 bis 50 gelangen, womit die Haltekraft zwischen den Dämmplatten 1, 43 bis 46 und der Wand 41 deutlich erhöht werden kann.

Eine Dämmplatte 1, 43 bis 46 bildet mit dem Klebemörtel somit eine Anordnung 64 bis 68, die ohne weitere Hilfsmittel, wie sie im Stand der Technik benutzt werden, an einer Wand oder einer Decke eines Gebäudes angebracht werden kann.

Der Klebemörtel besitzt nicht nur eine hohe Haltekraft, sondern auch eine große Hitzebeständigkeit. Das Brandverhalten (F 180) der Dämmplatten 1, 43 bis 46 wird von dem Klebemörtel nicht beeinflusst.

Der Klebemörtel der Klebemörtelschicht 63 weist einen relativ hohen Zementanteil auf, der für eine hohe innere Haftkraft des Klebemörtels sorgt. Der Klebemörtel weist Sand, insbesondere Quarzsand, auf, der eine Sieblinie mit einer Körnung von bis zu 1 mm besitzt. Ferner ist dem Klebemörtel Mehl oder feiner Füllstoff mit einer mittleren Korngröße von unter 0,2 mm zugesetzt. Vorteilhaft ist, wenn der Klebemörtel Flugasche aufweist. Diese Zusätze sind für die Rheologie des Klebemörtels entscheidend, bei dem die feinen Bestandteile eine Bindungswirkung entfalten und auch einen Teil des Anmachwassers speichern, womit eine ausreichende Verarbeitungszeit erzielt und einem "Verbrennen" des Mörtels, also einem unerwünschten Austrocknen des frischen Klebemörtels auf saugfähigem Untergrund, entgegengewirkt wird.

Weitere Zusätze wie Polymer-Dispersion in emulgierbarer Form, z. B. Acrylat-Dispersion, und Methylzellulose verbessern gleichfalls die Haftkraft und die Wasserdickung. Durch Stellmittel wie Stärke, Äther, Betonitmehl und/oder Mikrosilikatmehl kann die gewünschte Eindickung erzielt werden.

Der mineralische Klebemörtel weist folgende Trockenbestandteile auf:

| | |
|---|---|
| 30 bis 60 M% | Zement als Bindemittel |
| 30 bis 60 M% | Sand mit einer Körnung bis 1 mm |
| 5 bis 20 M% | mineralischer Füllstoff mit einer Körnung bis 0,2 mm |
| 0,5 bis 5 M% | emulgierbare Polymer-Dispersion |
| 0,05 bis 0,5 M% | Methylzellulose |
| 0,01 bis 0,3 M% | Stellmittel |

Diese Trockenbestandteile werden mit Anmachwasser in einer Menge von 2,0 bis 2,7 l pro kg an Trockenbestandteilen angemischt und gut durchgearbeitet.

Besonders bevorzugt ist dabei folgende Zusammensetzung der Trockenbestandteile:

| | |
|---|---|
| 35 bis 45 M% | Zement als Bindemittel |
| 42 bis 52 M% | Sand mit einer Körnung bis 1 mm |
| 5 bis 15 M% | mineralischer Füllstoff mit einer Körnung bis 0,2 mm |
| 1 bis 3 M% | emulgierbare Polymer-Dispersion |
| 0,1 bis 0,3 M% | Methylzellulose |
| 0,01 bis 0,1 M% | Stellmittel |

Diese Trockenbestandteile werden wiederum mit Anmachwasser in einer Menge von etwa 2,3 l/kg angemischt und gut durchgearbeitet.

Eine besonders bevorzugte Zusammensetzung von Trockenbestandteilen des Klebemörtels weist folgende Bestandteile auf:

| | |
|---|---|
| Portlandzement | 40 M% |
| Quarzsand | 47,63 M%, mit einer mittleren Korngröße von bis zu 0,6 mm |
| Flugasche | 10,0 M% |
| Kunststoff-Poylmer-Dispersion | 2,0 M% |
| Methylzellulose | 0,15 M% |
| Stellmittel | 0,17 M%. |

Diese Trockenbestandteile werden ebenfalls mit Anmachwasser in einer Menge von ca. 2,5 l/kg angemischt und gut durchgearbeitet. Als Stellmittel sind in dieser Ausführungsform Äther oder Stärke bevorzugt.

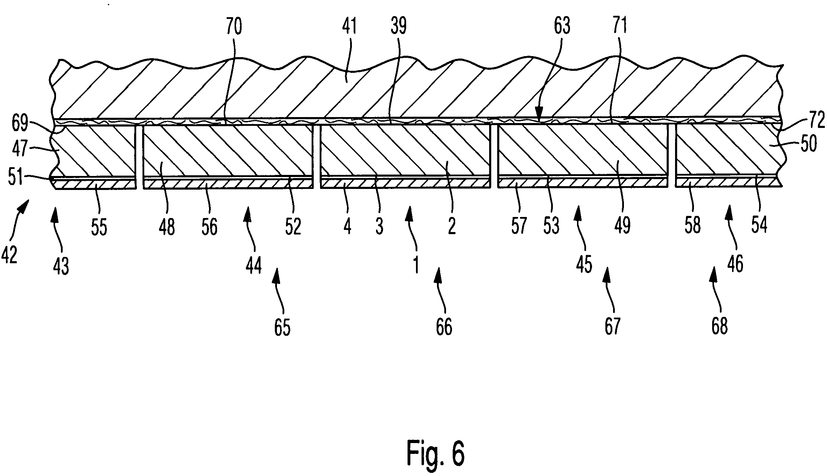

In Figur 6 ist ein Schnitt C-C durch den in Figur 5 dargestellten Ausschnitt der Wand 41 mit den daran angeordneten Dämmplatten 1, 43 bis 46 gezeigt. An der Wand 41 ist eine Klebemörtelschicht 63 in einer Stärke von bis zu 10 mm, vorzugsweise in einer Stärke von 1 bis 2 mm aufgebracht. Über die Klebemörtelschicht 63 sind als Reihe 42 die Dämmplatten 1, 43 bis 46 an der Wand 41 angeordnet.

Die Unterseiten 39, 69 bis 72 weisen vorzugsweise eine Perforation auf, so dass der Klebemörtel der Klebemörtelschicht 63 in die Mineralwolleschichten 2, 47 bis 50 der entsprechenden Dämmplatten 1, 43 bis 46 eindringen kann, wodurch die Haftkraft deutlich erhöht wird. Eine solche Perforation ist in der Figur 6 jedoch nicht zu erkennen.

Die Perforation, die an der Seite der schwer entflammbaren Mineralwolleschichten 2, 47 bis 50 angeordnet ist, auf denen die Bindemittelschichten 3, 51 bis 54 angebracht sind, ist in der Figur 6 ebenfalls nicht zu erkennen.

Das Anbringen der Dämmplatten an einer Wand beziehungsweise an einer Decke eines Gebäudes erfolgt dabei wie folgt, was am Beispiel des Anbringens einer erfindungsgemäßen Dämmplatte an einer Wand erläutert werden soll.

Zuerst wird die Wand kurz von grobem Schmutz und Staub befreit, was zum Beispiel mittels eines Besens erfolgen kann. Anschließend wird der Klebemörtel in einer Stärke von bis zu 10 mm auf die Wand aufgetragen. Vorzugsweise wird der Klebemörtel in einer Stärke von 1 bis 2 mm aufgetragen. Je nach Stärke der Dämmplatten wird der Klebemörtel folgendermaßen aufgetragen.

Weist die Dämmplatte eine Stärke von bis zu 100 mm auf, so kann der Klebemörtel entweder per Hand oder mit einer Putzmaschine auf die Wand aufgebracht werden. Der Klebemörtel wird mit einem Zahnspachtel, beispielsweise einem 10er Zahnspachtel, abgezogen. Die Dämmplatte wird anschließend schwimmend angedrückt. Da der Klebemörtel nicht direkt abbindet, kann die Dämmplatte an der Wand verschoben und so positioniert werden.

Weist die Dämmplatte eine Stärke von über 100 mm auf, so wird zusätzlich zu dem oben beschriebenen Verfahren die Dämmplatte vor dem Anbringen an die Wand an der Unterseite der Mineralwolleschicht mit einer dünnen Schicht aus Klebemörtel versehen. Dadurch wird beim Einschwimmen der Dämmplatte eine bessere Saugkraft erhalten.

Vorteilhaft bei der Verlegung der Dämmplatten ist, dass diese durch die Anordnung von Dämmplatte und Klebemörtel sehr einfach an der Wand angebracht werden können. So ist es beispielsweise möglich, die Dämmplatten von innen nach außen zum Rand hin an der Wand, das heißt von der einen Seite der Wand bis zur anderen Seite der Wand anzubringen, wie dies beispielsweise bei dem Verlegen von Fliesen möglich ist.

Es versteht sich, dass sich die Verfahren zum Anbringen einer Dämmplatte mittels des Klebemörtels an einer Decke eines Gebäudes von dem oben beschriebenen Verfahren nicht unterscheiden.

Der Klebemörtel zeichnet sich zudem durch gute Haltbarkeitseigenschaften und durch eine gute Verträglichkeit gegenüber herkömmlichen Wänden aus Beton aus.

Die Anordnung aus Dämmplatte und Klebemörtel kann dazu verwendet werden, beispielsweise Tiefgaragen oder Kellerräume mit Dämmplatten auszukleiden. Neben der Schall- und Wärmedämmung weisen die so an den Wänden beziehungsweise Decken angeordneten Dämmplatten eine gute Schlagfestigkeit und ein gutes Brandverhalten (F 180) auf.

Obwohl die Ausführungsbeispiele der Erfindung oben detailliert beschrieben wurden, ist die Erfindung nicht auf diese Ausführungsbeispiele beschränkt. Ein Fachmann versteht, dass die Erfindung verschiedene Varianten mit umfasst, mit denen dasselbe Ergebnis erzielt wird wie mit den hier beschriebenen Ausführungsbeispielen. Es ist deshalb für den Fachmann klar, dass mit den hier beschriebenen Ausführungsbeispielen der Schutzumfang der Ansprüche nicht eingeschränkt wird und dass es weitere Varianten, Modifikationen und Alternativen gibt, die unter den Schutzumfang der Ansprüche fallen.

### Bezugszeichen

- 1: Dämmplatte
- 2: Mineralwolleschicht
- 3: Bindemittelschicht
- 4: Holzwolle-Deckschicht
- 5: Oberfläche von 4
- 6: Perforation
- 7: Loch
- 8: Loch
- 9: Loch
- 10: Loch
- 11: Stift
- 12: Stift
- 13: Stift
- 14: Stift
- 15: Loch
- 16: Loch
- 17: Loch
- 18: Loch
- 19: Loch
- 20: Loch
- 21: Loch
- 22: Loch
- 23: Loch
- 24: Loch
- 25: Loch
- 26: Loch
- 27: Loch
- 28: Loch
- 29: Loch
- 30: Loch
- 31: Loch
- 32: Loch
- 33: Reihe
- 34: Reihe
- 35: Reihe
- 36: Reihe
- 37: Reihe
- 38: Reihe
- 39: Unterseite der Mineralwolleschicht 2
- 40: Seite
- 41: Wand
- 42: Reihe
- 43: Dämmplatte
- 44: Dämmplatte
- 45: Dämmplatte
- 46: Dämmplatte
- 47: Mineralwolleschicht
- 48: Mineralwolleschicht
- 49: Mineralwolleschicht
- 50: Mineralwolleschicht
- 51: Bindemittelschicht
- 52: Bindemittelschicht
- 53: Bindemittelschicht
- 54: Bindemittelschicht
- 55: Holzwolle-Deckschicht
- 56: Holzwolle-Deckschicht
- 57: Holzwolle-Deckschicht
- 58: Holzwolle-Deckschicht
- 59: Oberfläche von 55
- 60: Oberfläche von 56
- 61: Oberfläche von 57
- 62: Oberfläche von 58
- 63: Klebemörtelschicht
- 64: Anordnung
- 65: Anordnung
- 66: Anordnung
- 67: Anordnung
- 68: Anordnung
- 69: Unterseite
- 70: Unterseite
- 71: Unterseite
- 72: Unterseite

## Patentansprüche

1. Klebemörtel zum Anbringen einer Dämmplatte (1, 43 - 46) an einer Wand (41) oder einer Decke eines Gebäudes, **dadurch gekennzeichnet, dass** der Klebemörtel folgende Trockenbestandteile aufweist:
| | |
|---|---|
| 30 bis 60 M% | Zement als Bindemittel |
| 30 bis 60 M% | Sand mit einer Körnung bis 1 mm |
| 5 bis 20 M% | mineralischer Füllstoff mit einer Körnung bis 0,2 mm |
| 0,5 bis 5 M% | emulgierbare Polymer-Dispersion |
| 0,05 bis 0,5 M% | Methylzellulose |
| 0,01 bis 0,3 M% | Stellmittel. |

2. Klebemörtel nach Anspruch 1, **dadurch gekennzeichnet, dass** der Klebemörtel folgende Trockenbestandteile aufweist:
| | |
|---|---|
| 35 bis 45 M% | Zement als Bindemittel |
| 42 bis 52 M% | Sand mit einer Körnung bis 1 mm |
| 5 bis 15 M% | mineralischer Füllstoff mit einer Körnung bis 0,2 mm |
| 1 bis 3 M% | emulgierbare Polymer-Dispersion |
| 0,1 bis 0,3 M% | Methylzellulose |
| 0,01 bis 0,1 M% | Stellmittel. |

3. Klebemörtel nach Anspruch 1, **dadurch gekennzeichnet, dass** der Klebemörtel folgende Trockenbestandteile aufweist:
| | |
|---|---|
| 40 M% | Portlandzement |
| 47,63 M% | Quarzsand, mit einer mittleren Korngröße von bis zu 0,6 mm |
| 10,0 M% | Flugasche |
| 2,0 M% | Kunststoff-Polymer-Dispersion |
| 0,15 M% | Methylzellulose |
| 0,17 M% | Stellmittel. |

4. Anordnung, bestehend aus einer Dämmplatte (1, 43 - 46) sowie dem Klebemörtel nach den Ansprüchen 1 bis 3.

## Claims

1. An adhesive mortar for attaching an insulating board (1, 43 - 46) to a wall (41) or a ceiling of a building, **characterised in that** the adhesive mortar has the following dry constituents:
| | |
|---|---|
| 30 to 60 % by mass | cement as a binding agent |
| 30 to 60 % by mass | sand with a graining of up to 1 mm |
| 5 to 20 % by mass | mineral filler with a graining of up to 0.2 mm |
| 0.5 to 5 % by mass | emulsive polymer dispersion |
| 0.05 to 0.5 % by mass | methyl cellulose |
| 0.01 to 0.3 % by mass | suspending agent. |

2. The adhesive mortar as claimed in claim 1, **characterised in that** the adhesive mortar has the following dry constituents:
| | |
|---|---|
| 35 to 45 % by mass | cement as a binding agent |
| 42 to 52 % by mass | sand with a graining of up to 1 mm |
| 5 to 15 % by mass | mineral filler with a graining of up to 0.2 mm |
| 1 to 3 % by mass | emulsive polymer dispersion |
| 0.1 to 0.3 % by mass | methyl cellulose |
| 0.01 to 0.1 % by mass | suspension agent. |

3. The adhesive mortar as claimed in claim 1, **characterised in that** the adhesive mortar has the following dry constituents:
| | |
|---|---|
| 40 % by mass | Portland cement |
| 47.63 % by mass | quartz sand with an average grain size of up to 0.6 mm |
| 10 % by mass | fly ash |
| 2 % by mass | plastics polymer dispersion |
| 0.15 % by mass | methyl cellulose |
| 0.17 % by mass | suspension agent. |

4. An assembly consisting of an insulating board (1, 43 - 46) and the adhesive mortar according to claims 1 to 3.

## Revendications

1. Mortier adhésif pour l'application d'un panneau isolant (1, 43-46) sur un mur (41) ou un plafond d'un bâtiment, **caractérisé en ce que** le mortier adhésif présente les constituants suivants à sec :
| | |
|---|---|
| 30 à 60 % en masse | ciment comme liant, |
| 30 à 60 % en masse | sable d'une granulométrie jusqu'à 1 mm, |
| 5 à 20 % en masse | charge minérale d'une granulométrie jusqu'à 0,2 mm, |
| 0,5 à 5 % en masse | dispersion polymère émulsionnable, |
| 0,05 à 0,5 % en masse | méthylcellulose, |
| 0,01 à 0,3 % en masse | agent de fixation. |

2. Mortier adhésif selon la revendication 1, **caractérisé en ce que** le mortier adhésif présente les constituants suivants à sec :
| | |
|---|---|
| 35 à 45 % en masse | ciment comme liant, |
| 42 à 52 % en masse | sable d'une granulométrie de 1 mm |
| 5 à 15 % en masse | charge minérale d'une granulométrie jusqu'à 0,2 mm, |
| 1 à 3 % en masse | dispersion polymère émulsionnable, |
| 0,1 à 0,3 % en masse | méthylcellulose, |
| 0,01 à 0,1 % en masse | agent de fixation. |

3. Mortier adhésif selon la revendication 1, **caractérisé en ce que** le mortier adhésif présente les constituants suivants à sec :
| | |
|---|---|
| 40 % en masse | ciment de Portland, |
| 47,63 % en masse | sable quartzeux d'une granulométrie moyenne jusqu'à 0,6 mm, |
| 10,0 % en masse | cendres volantes, |
| 2,0 % en masse | dispersion polymère de matière plastique, |
| 0,15 % en masse | méthylcellulose, |
| 0,17 % en masse | agent de fixation. |

4. Aménagement constitué d'un panneau isolant (1, 43-46) ainsi que du mortier adhésif selon les revendications 1 à 3.
